# EUROPEAN PATENT APPLICATION

(11) **EP 4 135 380 A1**
(43) Date of publication of application: **15.02.2023**
(21) Application number: 21805135.7
(22) Date of filing: 07.05.2021
(51) Int. Cl.: H04W 12/06, H04W 76/10

(54) **SECURE COMMUNICATION METHOD, AND RELATED APPARATUS AND SYSTEM**

(30) Priority: 11.05.2020 CN 202010394218
(71) Applicant: Huawei Technologies Co., Ltd., Shenzhen, Guangdong 518129, (CN)
(72) Inventor: SHAO, Guoqiang, Shenzhen, Guangdong 518129 (CN)
(74) Representative: MERH-IP Matias Erny Reichl Hoffmann Patentanwälte PartG mbB
(86) International application number: PCT/CN2021/092229
(87) International publication number: WO 2021/227964

(57) **Abstract**

Embodiments of this application provide a secure communication method and a related apparatus and system. In technical solutions provided in embodiments, a first SEPP device may perform verification on validity of a device certificate of a second SEPP device by using a security certificate corresponding to the second SEPP device, thereby improving security of communication between the first SEPP device and the second SEPP device. The second SEPP device may also perform verification on a device certificate of the first SEPP device by using a similar secure communication method. Compared with the device certificate sent by the second SEPP device, a security certificate sent by a security server is more reliable.

## Description

This application claims priority to Chinese Patent Application No. 202010394218.5, filed with the China National Intellectual Property Administration on May 11, 2020 and entitled "SECURE COMMUNICATION METHOD AND RELATED APPARATUS AND SYSTEM", which is incorporated herein by reference in its entirety.

### TECHNICAL FIELD

This application relates to the field of communication technologies, and in particular, to a secure communication method, a related communication apparatus and system, and a related computer-readable storage medium.

### BACKGROUND

Currently, the 3rd generation partnership project (3rd Generation Partner Project, 3GPP) defines a security and edge protection proxy (Security and Edge Protection Proxy, SEPP) device as an edge security gateway of a 5G core network (5G Core, 5GC). The SEPP device is a proxy device for interworking between different operator networks. Signaling exchange between an internal network function (Network Function, NF) device of the 5G core network and a roaming network is forwarded by the SEPP device.

The conventional technology has not provided a specific solution for implementing secure communication between SEPP devices in different operator networks. In this case, a signaling message transmitted between the SEPP devices may be obtained without authorization.

### SUMMARY

Embodiments of this application provide a communication method and system, a related apparatus, and a computer-readable storage medium.

According to a first aspect, an embodiment of this application provides a secure communication method, including:
a first security and edge protection proxy SEPP device receives a first message from a security server, where the first message carries a security certificate corresponding to a second SEPP device; then the first SEPP device receives a device certificate sent by the second SEPP device, and performs verification on the device certificate of the second SEPP device by using the security certificate corresponding to the second SEPP device; and if the verification succeeds, the first SEPP device establishes a security connection to the second SEPP device.

In the technical solution provided in this embodiment, the first SEPP device may perform verification on validity of the device certificate of the second SEPP device by using the security certificate corresponding to the second SEPP device, thereby improving security of communication between the first SEPP device and the second SEPP device. The second SEPP device may also perform verification on a device certificate of the first SEPP device by using a similar secure communication method. Compared with the device certificate sent by the second SEPP device, the security certificate sent by the security server is more reliable. Compared with a conventional technology, this embodiment provides a solution in which two SEPP devices perform verification on device certificates of each other, thereby improving security of communication between the two SEPP devices.

In a possible embodiment, the security certificate corresponding to the second SEPP device is a root certificate of a certificate server of the second SEPP device. In this case, the first SEPP device may perform verification on security of the device certificate sent by the second SEPP device, by using the root certificate, sent by the security server, of the certificate server of the second SEPP device.

In a possible embodiment, the security certificate corresponding to the second SEPP device is the device certificate of the second SEPP device. In this case, the first SEPP device may perform verification on security of the device certificate sent by the second SEPP device, by using the device certificate, sent by the security server, of the second SEPP device. Compared with using the root certificate to perform verification on the device certificate, directly using the device certificate obtained from the security server to perform verification on the device certificate sent by the second SEPP device is more efficient.

In a possible embodiment, the security certificate, received by the first SEPP device, of the second SEPP device is a public key of the second SEPP device. In this case, the first SEPP device may perform verification on security of the public key sent by the second SEPP device, by using the device certificate, sent by the security server, of the second SEPP device.

In a possible embodiment, before the first SEPP device receives the first message from the security server, the first SEPP device sends a certificate request message to the security server, where the certificate request message carries an identifier of the second SEPP device, and the certificate request message is used to request the security certificate corresponding to the second SEPP device.

In a possible embodiment, the security server is a domain name system DNS server, and the certificate request message sent by the first SEPP device is a DNS query request. In this case, the security server may send, to the first SEPP device by using a DNS query response, the security certificate corresponding to the second SEPP device. In this embodiment, the obtaining of the security certificate corresponding to the second SEPP device is combined with a DNS query process, so that the security certificate can be obtained during a DNS query, thereby saving message resources and improving communication efficiency.

In a possible embodiment, a correspondence between a host name of the first SEPP device and a root certificate of a certificate server of the first SEPP device and a correspondence between a host name of the second SEPP device and the root certificate of the certificate server of the second SEPP device may be configured on the DNS server.

In a possible embodiment, before the first SEPP device receives the first message from the security server, the first SEPP device further sends a second message to the security server, where the second message carries a security certificate corresponding to the first SEPP device. In addition, the second message further carries an identifier of the first SEPP device. In this embodiment, the first SEPP device uploads the security certificate corresponding to the first SEPP device to the security server by using the second message, so that the security server stores the security certificate.

In a possible embodiment, the second message may be a hypertext transfer protocol message or a hypertext transfer protocol secure message.

In a possible embodiment, when the first SEPP device successfully verifies the device certificate of the second SEPP device by using the security certificate, the first SEPP device sends a verification success message to the second SEPP device. Therefore, the second SEPP device may generate, in response to the verification success message, a session key used for communication with the first SEPP device.

In a possible embodiment, that the first SEPP device establishes a security connection to the second SEPP device includes: The first SEPP device calculates a session key used for secure communication with the second SEPP device; and then, the first SEPP device establishes a security connection to the second SEPP device by using the session key. In this embodiment, each SEPP device calculates a session key and then establishes a security connection by using the session key, so that security of communication between the first SEPP device and the second SEPP device can be enhanced.

According to a second aspect, an embodiment of this application provides another secure communication method. The method mainly includes:
a security server obtains a security certificate corresponding to a second security and edge protection proxy SEPP device; and then, the security server sends a first message to a first SEPP device, where the first message carries the security certificate corresponding to the second SEPP device.

In the solution provided in this embodiment, the security certificate sent by the security server to the first SEPP device is more reliable than a device certificate sent by the second SEPP device to the first SEPP device. Therefore, the first SEPP device may perform verification on the device certificate sent by the first SEPP device, by using the security certificate sent by the security server, thereby improving security of communication between the first SEPP device and the second SEPP device.

In a possible embodiment, before the security server obtains a root certificate of a certificate server of the second SEPP device, the security server receives a certificate request message sent by the first SEPP device, where the certificate request message carries an identifier of the second SEPP device. The certificate request message is used to request the security certificate corresponding to the second SEPP device.

In a possible embodiment, before the security server obtains the security certificate corresponding to the second SEPP device, the security server receives a second message sent by the second SEPP device, where the second message carries the security certificate corresponding to the second SEPP device.

In a possible embodiment, the second message further carries the identifier of the second SEPP device.

In a possible embodiment, before the security server obtains the security certificate corresponding to the second SEPP device, the security server receives a second message sent by the first SEPP device, where the second message carries a security certificate corresponding to the first SEPP device.

According to a third aspect, an embodiment of this application provides a computer-readable storage medium. The computer-readable storage medium stores a computer program. When the computer program is executed by a processor, the method according to either the first aspect or the second aspect can be performed.

According to a fourth aspect, an embodiment of this application provides a security and edge protection proxy SEPP device. The device includes at least one processor and a memory coupled to the processor. The memory stores computer program code. The processor invokes and executes the computer program code in the memory, to enable the SEPP device to perform the method according to the first aspect.

According to a fifth aspect, an embodiment of this application provides a secure communication system. The system includes:
a core-network network function device and a first SEPP device, where the core-network network function device is configured to send a signaling message to the first SEPP device; and
the first SEPP device is configured to perform the method in the first aspect, and send the received signaling message to a second SEPP device through a security connection.

In a possible embodiment, the signaling message is a roaming signaling message.

According to a sixth aspect, an embodiment of this application provides a first SEPP device. The first SEPP device mainly includes:
a communication unit, configured to receive a first message from a security server, where the first message carries a security certificate corresponding to a second SEPP device, and the communication unit is further configured to receive a device certificate sent by the second SEPP device.

The first SEPP device further includes a verification unit and a connection establishment unit, where the verification unit is configured to perform verification on the device certificate of the second SEPP device by using the received security certificate, and the connection establishment unit is configured to establish a security connection to the second SEPP device after the verification succeeds.

The first SEPP device provided in this embodiment may be used in the secure communication methods provided in the first aspect and the second aspect. For specific details and beneficial effects, refer to the foregoing embodiments.

In a possible embodiment, the communication unit is further configured to send a certificate request message to the security server, where the certificate request message carries an identifier of the second SEPP device.

In a possible embodiment, the security certificate corresponding to the second SEPP device may be a root certificate of a certificate server of the second SEPP device, or may be the device certificate of the second SEPP device.

In a possible embodiment, the communication unit is further configured to send a second message to the security server, where the second message carries a security certificate corresponding to the first SEPP device. Therefore, the second SEPP device may obtain the security certificate corresponding to the first SEPP device from the security server, and perform verification on a device certificate of the first SEPP device, thereby enhancing security of communication between the first SEPP device and the second SEPP device.

In a possible embodiment, the communication unit is further configured to: when the verification unit successfully verifies the device certificate of the second SEPP device by using the security certificate, send a verification success message to the second SEPP device, to notify the second SEPP device that the certificate verification succeeds.

In a possible embodiment, that the connection establishment unit establishes a security connection to the second SEPP device may specifically include:
the connection establishment unit calculates a session key used for secure communication with the second SEPP device; and then the connection establishment unit establishes a security connection to the second SEPP device by using the session key.

According to a seventh aspect, an embodiment of this application provides a security server. The security server mainly includes an obtaining unit and a communication unit.

The obtaining unit is configured to obtain a security certificate corresponding to a second security and edge protection proxy SEPP device. The communication unit is configured to send a first message to a first SEPP device, where the first message carries the security certificate corresponding to the second SEPP device.

The security server provided in this embodiment may be used in the secure communication methods provided above. For specific details and beneficial effects, refer to the foregoing embodiments.

In a possible embodiment, the communication unit is further configured to receive a certificate request message sent by the first SEPP device, where the certificate request message carries an identifier of the second SEPP device.

In a possible embodiment, before the obtaining unit obtains the security certificate corresponding to the second SEPP device, the communication unit further receives a second message sent by the second SEPP device, where the second message carries the security certificate corresponding to the second SEPP device.

According to an eighth aspect, an embodiment of this application provides an SEPP device, including a processor and a memory that are coupled to each other. The processor is configured to invoke a computer program stored in the memory, to perform some or all of steps of any method performed by an SEPP device in embodiments of this application.

According to a ninth aspect, an embodiment of this application provides a security server, including a processor and a memory that are coupled to each other. The processor is configured to invoke a computer program stored in the memory, to perform some or all of steps of any method performed by a security server device in embodiments of this application.

According to a tenth aspect, an embodiment of this application provides a computer-readable storage medium. The computer-readable storage medium stores a computer program. When the computer program is executed by a processor, some or all of steps of any method performed by an SEPP device or a security server in embodiments of this application can be completed.

According to an eleventh aspect, an embodiment of this application provides a communication apparatus, including at least one input terminal, a signal processor, and at least one output terminal. The signal processor is configured to perform some or all of steps of any method performed by an SEPP device or a security server in embodiments of this application.

According to a twelfth aspect, an embodiment of this application provides a communication apparatus, including an input interface circuit, a logic circuit, and an output interface circuit. The logic circuit is configured to perform some or all of steps of any method performed by an SEPP device or a security server in embodiments of this application.

According to a thirteenth aspect, an embodiment of this application provides a computer program product including instructions. When the computer program product is run on a computer device, the computer device is enabled to perform some or all of steps of any method that can be performed by an SEPP device or a security server.

In the embodiment provided in any one of the foregoing aspects, the security server may be a DNS server, and the first message received by the first SEPP device may be a DNS response message.

In the embodiment provided in any one of the foregoing aspects, the security connection established between the first SEPP device and the second SEPP device is a transport layer security connection.

### BRIEF DESCRIPTION OF DRAWINGS

The following briefly describes the accompanying drawings for embodiments of this application.
FIG. 1-A is a schematic diagram of a 5G network architecture according to an embodiment of this application;
FIG. 1-B is a schematic diagram of a network architecture in a roaming scenario according to an embodiment of this application;
FIG. 1-C is a schematic diagram of a network architecture in another roaming scenario according to an embodiment of this application;
FIG. 1-D is a schematic diagram of a network architecture in another roaming scenario according to an embodiment of this application;
FIG. 1-E is a schematic diagram of a network architecture in another roaming scenario according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic diagram of functions of an SEPP device according to an embodiment of this application;
FIG. 6 is a schematic diagram of functions of a security server according to an embodiment of this application;
FIG. 7 is a schematic diagram of a structure of a communication apparatus according to an embodiment of this application;
FIG. 8 is a schematic diagram of an interface of a board in a communication apparatus according to an embodiment of this application; and
FIG. 9 is a diagram of a hardware structure of an SEPP device and a security server according to an embodiment of this application.

### DESCRIPTION OF EMBODIMENTS

The following describes technical solutions in embodiments of this application with reference to the accompanying drawings in embodiments of this application.

In the specification, claims, and accompanying drawings of this application, the terms "first", "second", and the like are intended to distinguish between different objects but do not indicate a particular order.

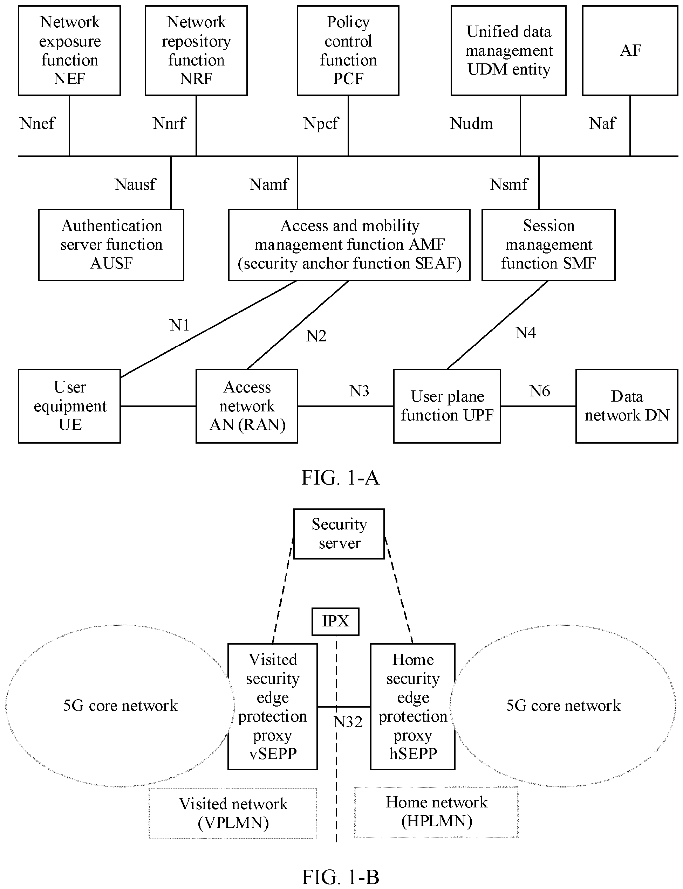

FIG. 1-A is a schematic diagram of a 5G network architecture according to an embodiment of this application. In a 5G network, some function devices (for example, a mobility management entity (Mobility Management Entity, MME)) of a 4G network are split, and an architecture based on a service-based architecture is defined. In the network architecture shown in FIG. 1-A, a function similar to the MME in the 4G network is split into an access and mobility management function (Access and Mobility Management Function, AMF), a session management function (Session Management Function, SMF), and the like.

The following describes some other related devices, network elements, or entities.

A user terminal (User Equipment, UE) accesses an operator network to access a data network and the like, and uses a service provided by an operator or a third party in the DN.

For ease of description, in embodiments of this application, a user terminal, user equipment, a terminal device, a mobile terminal, a terminal, or the like may be collectively referred to as UE. In other words, unless otherwise specified, UE described in the following embodiments of this application may be replaced with a user terminal, user equipment, a terminal device, a mobile terminal, or a terminal, which are certainly also interchangeable.

An access and mobility management function (AMF) is a control plane function in a 3GPP network, and is mainly responsible for access control and mobility management for UE accessing an operator network. A security anchor function (Security Anchor Function, SEAF) may be deployed in the AMF, or the SEAF may be deployed in another device different from the AMF. In FIG. 1-A, for example, the SEAF is deployed in the AMF. When the SEAF is deployed in the AMF, the SEAF and the AMF may be collectively referred to as an AMF.

A session management function (SMF) is a control plane function in a 3GPP network. The SMF is mainly configured to be responsible for managing a packet data unit (Packet Data Unit, PDU) session of UE. The PDU session is a channel for transmitting a PDU. The UE and a DN may send PDUs to each other through the PDU session. The SMF is responsible for management, for example, establishment, maintenance, and deletion, for the PDU session.

A data network (Data Network, DN) is also referred to as a packet data network (Packet Data Network, PDN), and is a network outside a 3GPP network. The 3GPP network may access a plurality of DNs, and a plurality of services provided by an operator or a third party may be deployed on the DNs. For example, a DN is a private network of a smart factory, a sensor mounted in a workshop of the smart factory plays a role of UE, and a control server of the sensor is deployed in the DN. The UE communicates with the control server. After obtaining instructions of the control server, the UE may transmit collected data to the control server based on the instructions. For another example, a DN is an internal office network of a company, a terminal used by an employee of the company may play a role of UE, and the UE may access internal information and other resources of the company.

A unified data management entity (Unified Data Management, UDM) is also a control plane function in a 3GPP network. The UDM is mainly responsible for storing subscription data, a credential (credential), a subscriber permanent identifier (Subscriber Permanent Identifier, SUPI), and the like of a subscriber (UE) in the 3GPP network. The data may be used for authentication and authorization for the UE to access a 3GPP network of an operator.

An authentication server function (Authentication Server Function, AUSF) is also a control plane function in a 3GPP network, and the AUSF is mainly used for first-level authentication (to be specific, authentication performed by the 3GPP network on a subscriber of the 3GPP network).

A network exposure function (Network Exposure Function, NEF) is also a control plane function in a 3GPP network. The NEF is mainly responsible for opening an external interface of the 3GPP network to a third party in a secure manner. When a function, for example, an SMF, needs to communicate with a third-party network element, the NEF may serve as a relay for communication. During relaying, the NEF may perform translation between internal and external identifiers. For example, when an SUPI of UE is sent from the 3 GPP network to a third party, the NEF may translate the SUPI into an external identity (Identity, ID) corresponding to the SUPI. Conversely, when an external identity ID is sent to the 3GPP network, the NEF may translate the external identity ID into a corresponding SUPI.

A network repository function (Network Repository Function, NRF) is also a control plane function in a 3GPP network, and is mainly responsible for storing a configuration and a service profile (profile) of an accessible network function (NF), and providing a network function discovery service for another network element.

A user plane function (User Plane Function, UPF) is a gateway for communication between a 3GPP network and a DN.

A policy control function (Policy Control Function, PCF) is a control plane function in a 3GPP network, and is configured to provide a PDU session policy for an SMF. Policies may include charging, quality of service (Quality of Service, QoS), an authorization-related policy, and the like.

An access network (Access Network, AN) is a sub-network of a 3GPP network. To access the 3GPP network, UE first needs to access the AN. In a radio access scenario, the AN is also referred to as a radio access network (Radio Access Network, RAN). Therefore, the terms RAN and AN are usually used interchangeably without distinguishing.

A 3GPP network is a network that complies with the 3GPP standard. In FIG. 1-A, a part other than UE and a DN may be considered as a 3GPP network. The 3GPP network is not limited to a 5G network defined by the 3GPP, but may further include 2G, 3G, and 4G networks. The 3GPP network is usually run by an operator. In addition, in the architecture shown in FIG. 1-A, N1, N2, N3, N4, N6, and the like represent reference points (Reference Point) between related entities or network functions. Nausf, Namf, and the like represent service-based interfaces of related network functions.

Certainly, the 3GPP network and a non-3GPP network may coexist, and some network elements in the 5G network may be alternatively used in some non-5G networks.

As shown in FIG. 1-B, an SEPP device serves as an edge security gateway of a 5G core network (5GC). In a roaming scenario, the SEPP device serves as a proxy for interworking between operator networks. A signaling message between an internal network function (NF) of the 5G core network and a roaming network is forwarded by the SEPP device. The SEPP device supports protection for integrity and confidentiality of a transmitted message, and also supports an IPX device (IPX for short) in identifying and modifying content of an insensitive transmitted message.

The foregoing architecture further includes a security server. The security server may communicate with the SEPP device. The security server may store some security information, for example, a security certificate of the SEPP device or a root certificate of an issuing authority of the security certificate of the SEPP device.

The security server may also be referred to as a third-party server, and may be deployed by an industry organization such as the Global System for Mobile Communications Association (GSM Association, GSMA) or a government agency, or may be a device in an IP exchange service (IP exchange service, IPX) network, that is, a device in the IPX network implements a function of the security server in this embodiment of this application. Devices in the IPX network may include a Diameter routing agent (Diameter routing agent, DRA) device and a domain name server (domain name server, DNS).

In embodiments of this application, an SEPP device may also be referred to as an SEPP (for example, a first SEPP device is referred to as a first SEPP, a second SEPP device is referred to as a second SEPP, and so on), that is, an SEPP and an SEPP device may be used interchangeably. An IPX device is referred to as an IPX (for example, a first IPX device is referred to as a first IPX, a second IPX device is referred to as a second IPX, and so on), that is, an IPX device and an IPX may be used interchangeably.

When UE roams between different operator networks, SEPP devices may be classified into a visited SEPP (visit SEPP, vSEPP) device and a home SEPP (home SEPP, hSEPP) device.

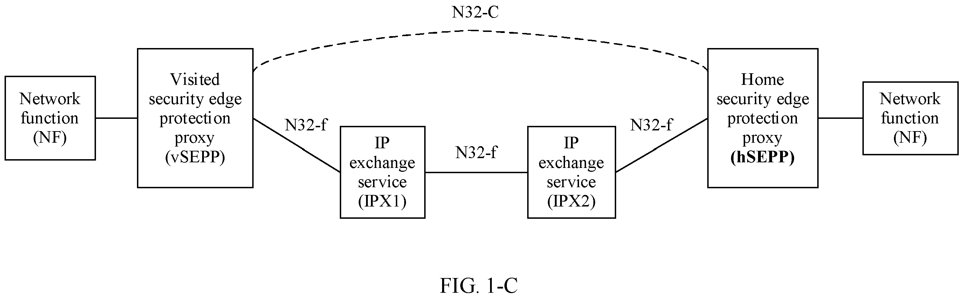

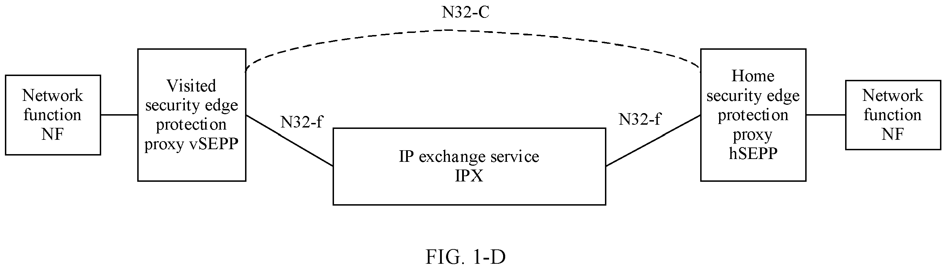

As shown in FIG. 1-C and FIG. 1-D, SEPP devices in different operator networks may be connected through an N32 interface. For example, a vSEPP device and an hSEPP device are directly connected through an N32-C interface; or a vSEPP device may be connected to an IPX through an N32-f interface, and then the IPX is connected to an hSEPP device through an N32-f interface. There may be one IPX (for example, as shown in FIG. 1-D) or a plurality of IPXs (for example, as shown in FIG. 1-C) between SEPP devices.

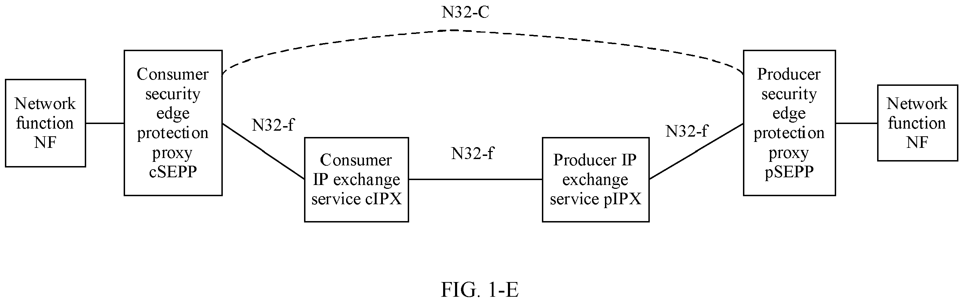

As shown in FIG. 1-E, from a perspective of providing a service and consuming a service, SEPP devices may be alternatively classified into a consumer SEPP device (consumer SEPP, cSEPP) and a producer SEPP device (producer SEPP, pSEPP). A vSEPP device may be a pSEPP device, and an hSEPP device may be a cSEPP device; or a vSEPP device may be a cSEPP device, and an hSEPP device may be a pSEPP device.

When there are a plurality of IPX networks between SEPP devices, an IPX network directly connected to a pSEPP device is referred to as a pIPX, and an IPX network directly connected to a cSEPP device is referred to as a cIPX.

The IPX network may include a DRA device and a DNS. An IPX device may be the DRA device or the DNS in the IPX network.

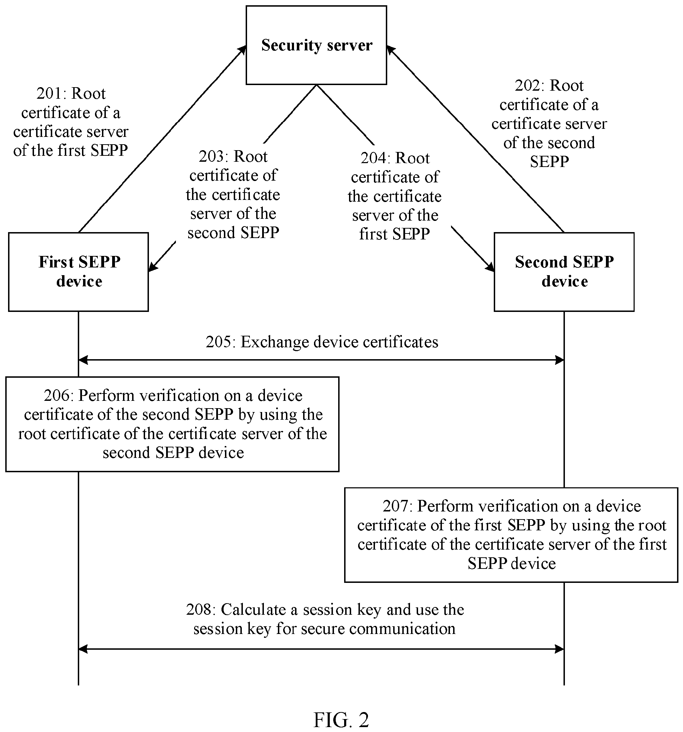

Based on the foregoing network architecture, the following describes an implementation solution for secure communication between two SEPP devices. FIG. 2 is a schematic flowchart of a secure communication method according to an embodiment of this application.

In this embodiment, an example in which a security certificate of an SEPP device is a root certificate of a certificate server of the SEPP device is used for description. A communication method in this embodiment may include the following steps.

201: A first SEPP device uploads a root certificate of a certificate server of the first SEPP device to a security server.

In this embodiment, the certificate server of the first SEPP device allocates a device certificate to the first SEPP device, and the first SEPP device also obtains the root certificate of the certificate server. The root certificate may be used to perform verification on validity of the device certificate of the first SEPP device. The certificate server may be specifically a trusted certificate issuing server.

In this embodiment, a security certificate uploaded by the first SEPP device to the security server is specifically the root certificate of the certificate server of the first SEPP device (the root certificate of the first SEPP device for short).

The first SEPP device may upload the root certificate to the security server by using a hypertext transfer protocol (Hypertext Transfer Protocol, http) message or a hypertext transfer protocol secure (Hypertext Transfer Protocol Secure, https) message. The message may further carry operator information of the first SEPP device, for example, one or more of a domain name of an operator, an identifier of the operator, and a public land mobile network identity (public land mobile network identity, PLMN ID). The message may also carry an identifier of the first SEPP device.

The security server may receive the security certificate uploaded by the first SEPP device by using a message, and locally store the security certificate. In this embodiment.

202: A second SEPP device uploads a root certificate of a certificate server of the second SEPP device to the security server.

In this embodiment, the certificate server of the second SEPP device allocates a device certificate to the second SEPP device, and the second SEPP device also obtains the root certificate of the certificate server. The root certificate may be used to perform verification on validity of the device certificate of the second SEPP device.

The second SEPP device may upload the root certificate to the security server by using an http message or an https message. The security server may receive a security certificate that corresponds to the second SEPP device and that is uploaded by the second SEPP device by using a message. In this embodiment, the security certificate is the root certificate of the certificate server of the second SEPP device (the root certificate of the second SEPP device for short).

In addition, steps 201 and 202 may be independent of a chronological order, that is, step 202 may be performed before step 201.

203: The first SEPP device receives a first message from the security server, where the first message carries the root certificate of the certificate server of the second SEPP device.

In this embodiment, the first SEPP device may actively send a request message (get message) to the security server to obtain the root certificate of the certificate server of the second SEPP device. Alternatively, the security server may actively push the root certificate of the certificate server of the second SEPP device to the first SEPP device by using the first message.

The first message may be a notification (notification) message. The first message may further carry an identifier and/or operator information of the second SEPP device. The identifier of the second SEPP device may be an address or a host name of the second SEPP device.

204: The second SEPP device receives a first message from the security server, where the first message carries the root certificate of the certificate server of the first SEPP device.

Correspondingly, the second SEPP device may also actively obtain the root certificate of the certificate server of the first SEPP device from the security server. Alternatively, the security server may actively push the root certificate of the certificate server of the first SEPP device to the second SEPP device by using the first message.

In addition, steps 203 and 204 may be independent of a chronological order, that is, step 204 may be performed before step 203. The first messages in step 203 and step 204 are of a same type, but carry different content.

After steps 201 to 204 are completed, the root certificate of the certificate server of the second SEPP device is stored on the first SEPP device, and the root certificate of the certificate server of the first SEPP device is also stored on the second SEPP device.

205: The first SEPP device receives the device certificate of the second SEPP device, and the second SEPP device receives the device certificate sent by the first SEPP device.

In this embodiment, when the first SEPP device establishes a data transmission (forwarding) channel to the second SEPP device, the first SEPP device and the second SEPP device exchange their respective device certificates.

In this embodiment, the first SEPP device and the second SEPP device may alternatively exchange their public keys.

206: The first SEPP device performs verification on the device certificate of the second SEPP device by using the root certificate of the certificate server of the second SEPP device.

In this embodiment, the first SEPP device performs verification, by using the previously stored root certificate of the certificate server of the second SEPP device, on the device certificate sent by the second SEPP device. A verification process includes verifying whether an issuing authority of the device certificate of the second SEPP device is an issuing authority in the root certificate. The root certificate may further include user information. The first SEPP device may verify whether the second SEPP device is a qualified user.

In addition, the first SEPP device may further perform verification on a validity period of the device certificate of the second SEPP device, whether the device certificate is revoked, and the like.

If the verification succeeds, the first SEPP device sends an encrypted message to the second SEPP device by using a public key in the device certificate of the second SEPP device, and the second SEPP device may decrypt the encrypted message by using a private key of the second SEPP device, to obtain a parameter, for example, a random number RAND 1, in the encrypted message. If the verification fails, the first SEPP device sends a failure notification message to the second SEPP device.

In this embodiment, if the first SEPP device and the second SEPP device exchange their respective public keys, the first SEPP device performs verification, by using the previously stored root certificate of the certificate server of the second SEPP device, on a public key sent by the second SEPP device. In this case, a verification process specifically includes verifying whether an issuing authority of the public key of the second SEPP device is the issuing authority in the root certificate.

207: The second SEPP device performs verification on the device certificate of the first SEPP device by using the root certificate of the certificate server of the first SEPP device.

Corresponding to step 206, the second SEPP device performs verification, by using the previously stored root certificate of the certificate server of the first SEPP device, on the device certificate sent by the first SEPP device. A verification process includes verifying whether an issuing authority of the device certificate of the first SEPP device is an issuing authority corresponding to the root certificate.

In addition, the second SEPP device may further perform verification on a validity period of the device certificate, whether the device certificate is revoked, and the like. During specific implementation, the first SEPP device may associate the device certificate of the second SEPP device with the root certificate of the certificate server of the second SEPP device by using the identifier of the second SEPP device.

If the verification succeeds, the second SEPP device sends an encrypted message to the first SEPP device by using a public key in the device certificate of the first SEPP device, and the first SEPP device may decrypt the encrypted message by using a private key of the first SEPP device, to obtain a parameter, for example, a random number RAND 2, in the encrypted message. If the verification fails, the second SEPP device sends a failure notification message to the first SEPP device.

In this embodiment, if the first SEPP device and the second SEPP device exchange their respective public keys, the second SEPP device performs verification, by using the previously stored root certificate of the certificate server of the first SEPP device, on a public key sent by the first SEPP device. In this case, a verification process specifically includes verifying whether an issuing authority of the public key of the first SEPP device is the issuing authority in the root certificate.

208: After the verification succeeds, the first SEPP device and the second SEPP device calculate a session key, and perform secure communication by using the session key.

After the first SEPP device sends a verification success message to the second SEPP device, the first SEPP device calculates, by using the RAND 1 and the RAND 2, a session key used for secure communication. Correspondingly, after sending a verification success message to the first SEPP device, the second SEPP device may also calculate, by using the RAND 1 and the RAND 2, a session key used for secure communication.

When calculating the session key, the first SEPP device and the second SEPP device may further use another parameter and encryption algorithm. This is not limited in this embodiment.

When forwarding a signaling message to each other, the first SEPP device and the second SEPP device may perform encryption by using the session key. After receiving the signaling message, a receiver may also perform decryption by using the session key. That is, a security connection is established between the first SEPP device and the second SEPP device.

In the technical solution provided in this embodiment, the first SEPP device may obtain the root certificate of the certificate server of the peer SEPP device (the second SEPP device) from the security server, and after subsequently receiving the device certificate of the second SEPP device, may perform verification on validity of the device certificate of the second SEPP device by using the root certificate of the certificate server, thereby improving security of communication between the first SEPP device and the second SEPP device. The second SEPP device may also perform verification on the device certificate of the first SEPP device by using a similar secure communication method. Compared with a conventional technology, this embodiment provides a solution in which two SEPP devices perform verification on device certificates of each other, thereby improving security of communication between the two SEPP devices.

In this embodiment of this application, after calculating the session key, the first SEPP device and the second SEPP device may perform secure communication by using the session key. In this case, a security connection (or referred to as a secure transmission channel, a secure link, a secure data forwarding channel, or the like) is established between the first SEPP device and the second SEPP device. The security connection may be specifically a transport layer security (Transport Layer Security, TLS) connection, an internet protocol security (Internet Protocol Security, IPsec) connection, another underlying security connection, or the like. A connection in embodiments of this application may also be referred to as a tunnel, a channel, or the like. For example, a TLS connection may also be referred to as a TLS tunnel or a TLS channel, and an IPsec connection may also be referred to as an IPsec tunnel or an IPsec channel.

It can be learned that, in the foregoing example solution, the first SEPP device may directly obtain the root certificate of the certificate server of the peer SEPP device from the connected security server, and further, when receiving the device certificate from the peer SEPP device, the first SEPP device performs security verification on the device certificate of the peer SEPP device by using the obtained root certificate, thereby improving security of communication between the first SEPP device and the second SEPP device. In addition, the foregoing solution helps implement automatic distribution of a root certificate of a certificate server of an SEPP device without manual intervention, thereby helping reduce a human error in a root certificate distribution process and a risk of being attacked in a transmission process. In addition, the foregoing root certificate distribution process is simplified, thereby helping reduce costs.

In this embodiment of this application, after the root certificates of the certificate servers of the first SEPP device and the second SEPP device are updated, the first SEPP device and the second SEPP device may update the root certificates to the security server. In this embodiment, the first SEPP device is used as an example to describe a root certificate update process.

For example, the first SEPP device may send an updated root certificate to the security server by using a second message, and the security server may update the locally stored root certificate of the security server of the first SEPP device. Then the security server may send the updated root certificate of the security server of the first SEPP device to the second SEPP device by using a first message. The process of steps 204 to 208 is performed between the second SEPP device and the first SEPP device again, to establish a new security connection between the first SEPP device and the second SEPP device, and a signaling message is encrypted by using a new session key.

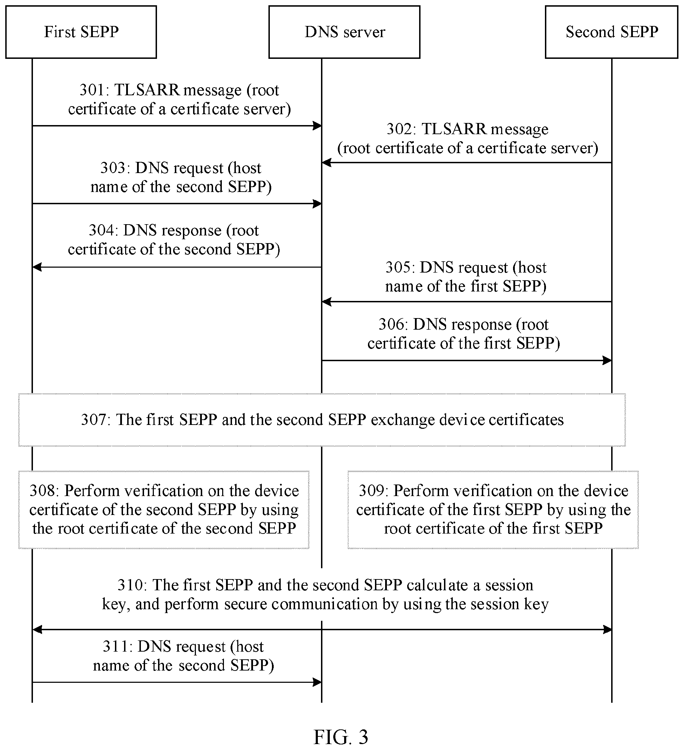

FIG. 3 is a schematic flowchart of another secure communication method according to an embodiment of this application.

In this embodiment, an example in which a security certificate of an SEPP device is a root certificate of a certificate server of the SEPP device is used for description. In an example solution of this embodiment, a security server is specifically a DNS server, and the DNS server may be located in an IPX network.

Specifically, the secure communication method in this embodiment may include the following steps.

301: A first SEPP device sends a TLSA RR message to the DNS server, where the TLSA RR message carries a host name of the first SEPP device and a root certificate of a certificate server of the first SEPP device.

In this embodiment, the first SEPP device uploads, to the DNS server by using a TLS authentication resource record (TLS Authentication resource record, TLSARR) message, a security certificate corresponding to the first SEPP device. In this embodiment, the security certificate is the root certificate of the certificate server of the first SEPP device.

In addition, the TLSARR message further includes the host name of the first SEPP device.

Content of the TLS RR message may be as follows: _443._tcp.www.example.com. IN TLSA (1 1 2 92003ba34942dc74152e2f2c408d29eca5a520e7f2e06bb944f4dca346baf63c1b177615d466f6c4b71c216a50292bd58 c9ebdd2f74e38fe51ffd48c43326cbc). Content in the parentheses includes the root certificate of the certificate server of the first SEPP device.

302: A second SEPP device sends a TLSA RR message to the DNS server, where the TLSARR message carries a host name of the second SEPP device and a root certificate of a certificate server of the second SEPP device.

For specific details about sending the TLSA RR message by the second SEPP device to the DNS server, refer to the descriptions of step 301. Steps 301 and 302 may be independent of a chronological order, that is, step 302 may be performed before step 301.

In a possible embodiment, the host name of the first SEPP device, the root certificate of the certificate server of the first SEPP device, the host name of the second SEPP device, and the root certificate of the certificate server of the second SEPP device may be configured on the DNS server. Therefore, the secure communication method provided in this embodiment may directly start from the following step 303.

303: The first SEPP device sends a DNS request message to the DNS server, where the DNS request message carries the host name of the second SEPP device.

In this embodiment, the first SEPP device actively obtains the root certificate of the certificate server of the second SEPP device from the DNS server by using the DNS request message. A message body of the DNS request message carries an identifier of the second SEPP device. In this embodiment, the identifier of the second SEPP device is the host name of the second SEPP device. The DNS request message may be specifically a DNS query request.

304: The DNS server sends a DNS response message to the first SEPP device, where the DNS response message carries the root certificate of the certificate server of the second SEPP device and a time to live (time to live, TTL).

After receiving the DNS request message sent by the first SEPP device, the DNS server obtains a root certificate corresponding to the identifier of the second SEPP device that is carried in the DNS request message, and then returns the DNS response message to the first SEPP device.

The DNS response message carries the root certificate of the certificate server of the second SEPP device and the time to live. In addition, the DNS response message may further carry an IP address of the second SEPP device. The DNS response message may be specifically a DNS query response.

After receiving the DNS response message, the first SEPP device caches the root certificate of the certificate server of the second SEPP device in the DNS response message. The DNS response message may be specifically a DNS query response.

305: The second SEPP device sends a DNS request message to the DNS server, where the DNS request message carries the host name of the first SEPP device.

306: The DNS server sends a DNS response message to the second SEPP device, where the DNS response message carries the root certificate of the certificate server of the first SEPP device and a time to live.

Correspondingly, the second SEPP device also sends the DNS request message to the DNS server, and the DNS server returns the DNS response message to the second SEPP device. A specific execution process of steps 305 and 306 is similar to that of steps 303 and 304. Details are not described herein again.

In addition, the sending the DNS request message by the second SEPP device to the DNS server and the sending the DNS request message by the first SEPP device to the DNS server are independent of a chronological order, that is, step 305 may be alternatively performed before step 303.

307: The first SEPP device receives a device certificate of the second SEPP device, and the second SEPP device receives a device certificate sent by the first SEPP device.

308: The first SEPP device performs verification on the device certificate of the second SEPP device by using the root certificate of the certificate server of the second SEPP device.

309: The second SEPP device performs verification on the device certificate of the first SEPP device by using the root certificate of the certificate server of the first SEPP device.

310: After the verification succeeds, the first SEPP device and the second SEPP device calculate a session key, and perform secure communication by using the session key.

An execution process of steps 307 to 310 is similar to that of steps 205 to 208. For details, refer to the descriptions of the foregoing embodiment.

311: After the TTL expires, the first SEPP device sends a DNS request message to the DNS server again, where the DNS request message carries the host name of the second SEPP device.

In this embodiment, the DNS response message received by the first SEPP device carries the TTL, and after determining that the TTL expires, the first SEPP device performs the step of sending a DNS request message again, to obtain a security certificate (a root certificate of a certificate server in this embodiment) corresponding to the second SEPP device again. After obtaining an updated security certificate, the first SEPP device performs the process of steps 307 to 310 again, to establish a new security connection to the second SEPP device.

After determining that the TTL expires, the second SEPP device may also perform the step of sending a DNS request message, that is, the process of step 305, again.

In the technical solution provided in this embodiment, when performing a DNS query, the first SEPP device obtains the root certificate of the certificate server of the second SEPP device from the DNS server, and after subsequently receiving the device certificate of the second SEPP device, may perform verification on validity of the device certificate of the second SEPP device by using the root certificate of the certificate server, thereby improving security of communication between the first SEPP device and the second SEPP device. The second SEPP device may also perform verification on the device certificate of the first SEPP device by using a similar secure communication method. In the technical solution of this embodiment, a DNS query process is also used, thereby further simplifying a process in which two SEPP devices perform verification on device certificates of each other, and improving verification efficiency.

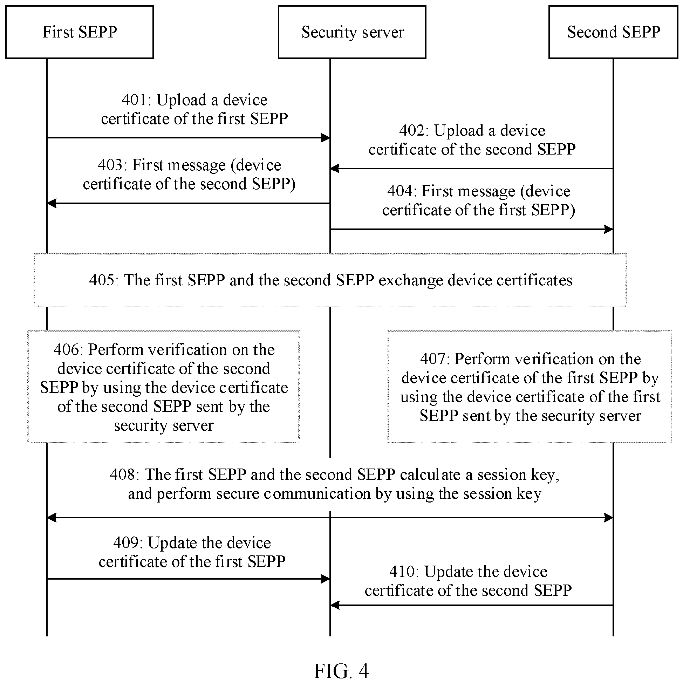

FIG. 4 is a schematic flowchart of a secure communication method according to an embodiment of this application.

In this embodiment, an example in which a security certificate of an SEPP device is a device certificate of the SEPP device is used for description. A communication method in this embodiment may include the following steps.

401: A first SEPP device uploads a device certificate of the first SEPP device to a security server.

In this embodiment, a certificate server of the first SEPP device allocates the device certificate to the first SEPP device. The device certificate may include a public key and a private key of the first SEPP device, and may further include a signature of the certificate server.

In this embodiment, a security certificate uploaded by the first SEPP device to the security server is the device certificate of the first SEPP device, and the first SEPP device may upload the device certificate of the first SEPP device to the security server by using an http message or an https message.

Alternatively, the first SEPP device may delete the private key from the device certificate, and then upload, to the security server, a device certificate in which the private key has been deleted, to avoid leakage of the private key. In this case, the device certificate received by the security server includes the public key of the first SEPP device, and does not include the private key of the first SEPP device.

402: A second SEPP device uploads a device certificate of the second SEPP device to the security server.

In this embodiment, the second SEPP device may upload the device certificate of the second SEPP device to the security server by using a similar method. For a specific process, refer to the descriptions of step 401.

In addition, steps 401 and 402 may be independent of a chronological order, that is, step 402 may be performed before step 401.

403: The first SEPP device receives a first message from the security server, where the first message carries the device certificate of the second SEPP device.

In this embodiment, the first SEPP device may actively send a request message to the security server to obtain the device certificate of the second SEPP device. Alternatively, the security server may actively push the device certificate of the second SEPP device to the first SEPP device by using the first message.

The first message may further carry an identifier of the second SEPP device. The identifier of the second SEPP device may be an address or a host name of the second SEPP device.

404: The second SEPP device receives a first message from the security server, where the first message carries the device certificate of the first SEPP device.

Steps 403 and 404 may be independent of a chronological order, that is, step 404 may be performed before step 403.

After steps 401 to 404 are completed, the device certificate of the second SEPP device is stored on the first SEPP device, and the device certificate of the first SEPP device is also stored on the second SEPP device.

405: The first SEPP device receives a device certificate sent by the second SEPP device, and the second SEPP device receives a device certificate sent by the first SEPP device.

In this embodiment, before the first SEPP device establishes a security connection (a data transmission channel) to the second SEPP device, the first SEPP device and the second SEPP device exchange their respective device certificates.

In this embodiment, the first SEPP device and the second SEPP device may alternatively exchange their public keys.

406: The first SEPP device performs verification on the device certificate sent by the second SEPP device, by using the device certificate, sent by the security server, of the second SEPP device.

In this embodiment, the first SEPP device performs verification, by using the previously stored device certificate of the second SEPP device, on the device certificate sent by the second SEPP device. If the two device certificates are the same, the verification succeeds. If the two device certificates are different, the verification fails.

If the verification succeeds, the first SEPP device sends an encrypted message to the second SEPP device by using a public key in the device certificate of the second SEPP device, and the second SEPP device may decrypt the encrypted message by using a private key of the second SEPP device, to obtain a parameter, for example, a random number RAND 1, in the encrypted message. If the verification fails, the first SEPP device sends a failure notification message to the second SEPP device.

In this embodiment, if the first SEPP device and the second SEPP device exchange their respective public keys, the first SEPP device performs verification, by using the previously stored device certificate of the second SEPP device, on a public key sent by the second SEPP device. In this case, a verification process specifically includes verifying whether an issuing authority of the public key of the second SEPP device is an issuing authority in the root certificate.

407: The second SEPP device performs verification on the device certificate sent by the first SEPP device, by using the device certificate, sent by the security server, of the first SEPP device.

Corresponding to step 406, the second SEPP device performs verification, by using the previously stored device certificate of the first SEPP device, on the device certificate sent by the first SEPP device.

If the verification succeeds, the second SEPP device sends an encrypted message to the first SEPP device by using a public key in the device certificate of the first SEPP device, and the first SEPP device may decrypt the encrypted message by using a private key of the first SEPP device, to obtain a parameter, for example, a random number RAND 2, in the encrypted message. If the verification fails, the second SEPP device sends a failure notification message to the first SEPP device.

In this embodiment, if the first SEPP device and the second SEPP device exchange their respective public keys, the second SEPP device performs verification, by using the previously stored device certificate of the first SEPP device, on a public key sent by the first SEPP device. In this case, a verification process specifically includes verifying whether an issuing authority of the public key of the first SEPP device is an issuing authority in the root certificate.

408: After the verification succeeds, the first SEPP device and the second SEPP device calculate a session key, and perform secure communication by using the session key.

An implementation process of step 408 is similar to that of step 208 in the foregoing embodiment. For details, refer to the foregoing embodiment. Details are not described herein again.

In the technical solution provided in this embodiment, the first SEPP device may obtain the device certificate of the peer SEPP device (the second SEPP device) from the security server, and after subsequently receiving the device certificate of the second SEPP device, may perform verification on validity of the device certificate sent by the second SEPP device, by using the device certificate, sent by the security server, of the second SEPP device, thereby improving security of communication between the first SEPP device and the second SEPP device. The second SEPP device may also perform verification on the security certificate of the first SEPP device by using a similar secure communication method. In addition, the foregoing solution helps implement automatic distribution of a device certificate of an SEPP device without manual intervention, thereby helping reduce a human error in a device certificate distribution process and a risk of being attacked in a transmission process.

In this embodiment of this application, the first SEPP device and the second SEPP device may perform steps 409 and 410 respectively, to be specific, after the device certificates of the first SEPP device and the second SEPP device are updated, update the device certificates to the security server. In this embodiment, the first SEPP device is used as an example to describe a device certificate update process.

For example, the first SEPP device may send an updated device certificate to the security server by using a second message, and the security server may update the locally stored device certificate of the first SEPP device. The security server may send the updated device certificate of the first SEPP device to the second SEPP device by using a first message. The process of steps 404 to 408 is performed between the second SEPP device and the first SEPP device again, to establish a new security connection between the first SEPP device and the second SEPP device, and a signaling message is encrypted by using a new session key.

The following describes some apparatus embodiments.

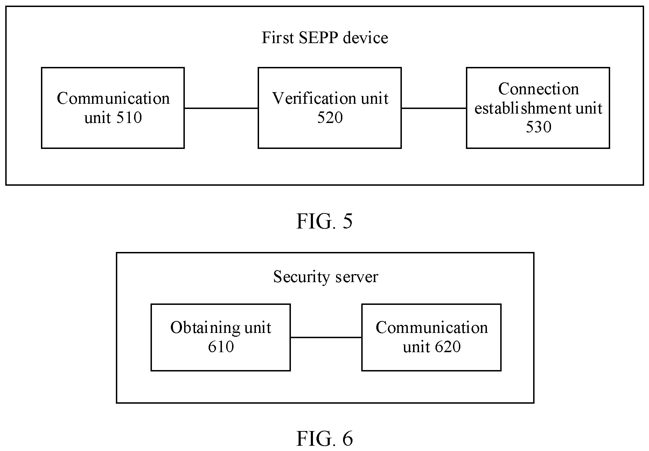

FIG. 5 is a schematic diagram of functions of an SEPP device according to an embodiment of this application. In this embodiment, a first SEPP device 500 is used as an example to describe functions of an SEPP device, and a second SEPP device may also include similar functional modules.

As shown in the figure, the first SEPP device 500 mainly includes a communication unit 510, a verification unit 520, and a connection establishment unit 530.

The communication unit 510 is configured to receive a first message from a security server, where the first message carries a security certificate corresponding to the second SEPP device, and the communication unit 510 is further configured to receive a device certificate sent by the second SEPP device.

The verification unit 520 is configured to perform verification on the device certificate of the second SEPP device by using the received security certificate.

The connection establishment unit 530 is configured to establish a security connection to the second SEPP device after the verification succeeds.

The first SEPP device provided in this embodiment may be used in the secure communication methods provided in the foregoing method embodiments. For specific details and beneficial effects, refer to the foregoing embodiments. In this embodiment, the first SEPP device and the second SEPP device may perform security verification through cooperation between the communication unit 510, the verification unit 520, and the connection establishment unit 530 in the first SEPP device, thereby improving security of communication between the first SEPP device and the second SEPP device.

In the first SEPP device provided in this embodiment, the communication unit 510 is further configured to send a certificate request message to the security server, where the certificate request message carries an identifier of the second SEPP device.

In this embodiment, the security certificate corresponding to the second SEPP device may be a root certificate of a certificate server of the second SEPP device, or may be the device certificate of the second SEPP device.

In the first SEPP device provided in this embodiment, the security server interacting with the first SEPP device may be a DNS server. In this case, the certificate request message sent by the first SEPP device is a DNS query request. Correspondingly, the first message is a DNS query response.

In the first SEPP device provided in this embodiment, the communication unit 510 is further configured to send a second message to the security server, where the second message carries a security certificate corresponding to the first SEPP device. Therefore, the second SEPP device may obtain the security certificate corresponding to the first SEPP device from the security server, and perform verification on a device certificate of the first SEPP device, thereby enhancing security of communication between the first SEPP device and the second SEPP device. In addition, the second message further carries an identifier of the first SEPP device.

In the first SEPP device provided in this embodiment, the communication unit 510 is further configured to: when the verification unit 520 successfully verifies the device certificate of the second SEPP device by using the security certificate, send a verification success message to the second SEPP device, to notify the second SEPP device that the certificate verification succeeds.

In the first SEPP device provided in this embodiment, that the connection establishment unit 530 establishes a security connection to the second SEPP device may specifically include:
the connection establishment unit 530 calculates a session key used for secure communication with the second SEPP device; and then, the connection establishment unit 530 establishes a security connection to the second SEPP device by using the session key.

The foregoing describes functional modules of an SEPP device by using the first SEPP device 500 as an example. The second SEPP device may also include corresponding functional modules. In this case, a communication unit in the second SEPP device is configured to receive a first message from the security server, where the first message carries the security certificate corresponding to the first SEPP device, and the communication unit is further configured to receive a device certificate sent by the first SEPP device. A verification unit in the second SEPP device is configured to perform verification on the device certificate of the first SEPP device by using the received security certificate. A connection establishment unit in the second SEPP device is configured to establish a security connection to the first SEPP device after the verification succeeds.

FIG. 6 is a schematic diagram of functions of a security server according to an embodiment.

As shown in the figure, the security server 600 mainly includes an obtaining unit 610 and a communication unit 620.

The obtaining unit 610 is configured to obtain a security certificate corresponding to a second security and edge protection proxy SEPP device. The communication unit 620 is configured to send a first message to a first SEPP device, where the first message carries the security certificate corresponding to the second SEPP device.

The security server provided in this embodiment may be used in the secure communication methods provided in the foregoing method embodiments. For specific details and beneficial effects, refer to the foregoing embodiments. The security server in this embodiment may send, to the first SEPP device through cooperation between the communication unit 620 and the obtaining unit 610, the security certificate corresponding to the second SEPP device, so that the first SEPP device performs verification on the second SEPP device by using the security certificate, thereby improving communication security.

In addition, the obtaining unit 610 may also obtain a security certificate corresponding to the first SEPP device, and then the communication unit 620 sends a first message to the second SEPP device, where the first message carries the security certificate corresponding to the first SEPP device. Therefore, the second SEPP device performs verification on the first SEPP device by using the security certificate, thereby improving communication security.

In the security server provided in this embodiment, the communication unit 620 is further configured to receive a certificate request message sent by the first SEPP device, where the certificate request message carries an identifier of the second SEPP device.

In the security server provided in this embodiment, before the obtaining unit 610 obtains the security certificate corresponding to the second SEPP device, the communication unit 620 further receives a second message sent by the second SEPP device, where the second message carries the security certificate corresponding to the second SEPP device. In this case, the obtaining unit 610 obtains, from the received second message, the security certificate corresponding to the second SEPP device. The second message may further carry the identifier of the second SEPP device, and the identifier is used to associate the second SEPP device with the security certificate corresponding to the second SEPP device.

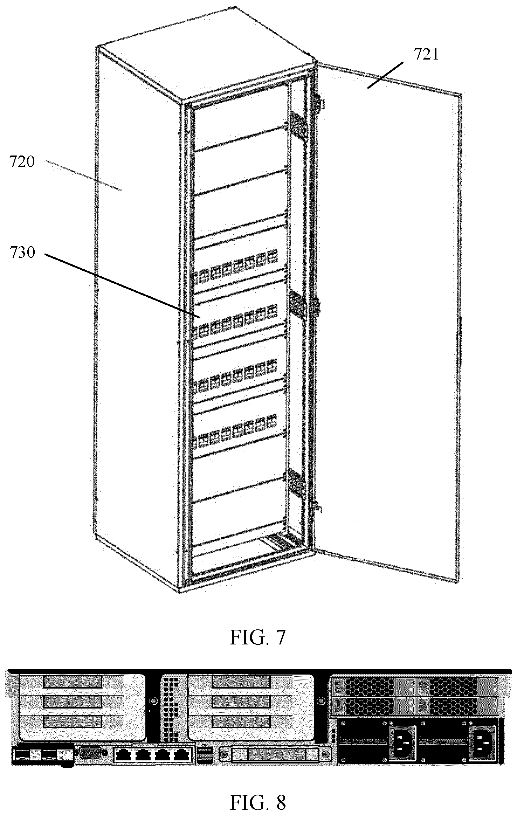

FIG. 7 is a schematic diagram of a structure of a communication apparatus 700 according to an embodiment of this application, and FIG. 8 is a schematic diagram of an interface of a board 730 in the communication apparatus 700.

As shown in the figure, the communication apparatus mainly includes a cabinet 720 and the board 730 mounted in the cabinet. The board includes a chip and an electronic component, and may provide a communication service. A quantity of boards 730 may be increased or decreased according to an actual requirement, and the quantity of boards 730 is not limited in this embodiment. In addition, the cabinet 720 is further equipped with a cabinet door 721.

The board 730 includes a plurality of input/output interfaces, for example, a display interface 731 used for connecting an external display, a network interface 732 connected to a communication network, and a universal serial bus (Universal Serial Bus, USB) interface 733.

In addition, the board 730 further includes a power interface 733 connected to a power supply, a heat dissipation vent 734 used for heat dissipation, and the like.

The communication apparatus implements different functions when equipped with different boards 730, for example, may implement functions of an SEPP device or a security server in embodiments of this application. The board 730 is equipped with a control element, for example, a general purpose processor, a control chip, or a logic circuit. The board 730 may also be equipped with a memory. The processor and the memory may cooperate with a related communication interface to perform some or all of steps of any method that can be performed by an SEPP device or a security server in embodiments of this application.

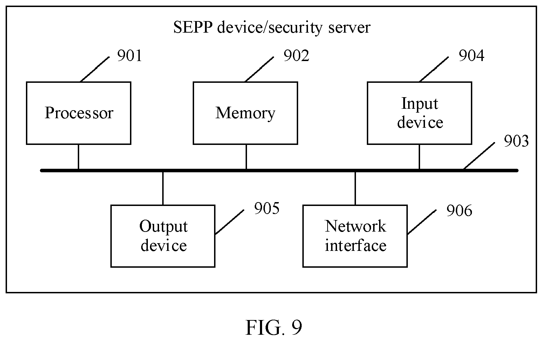

FIG. 9 is a diagram of a hardware structure of an SEPP device and a security server according to an embodiment of the present invention.

General purpose computer hardware may be used for both the SEPP device and the security server provided in this embodiment, including a processor 901, a memory 902, a bus 903, an input device 904, an output device 905, and a network interface 906.

Specifically, the memory 902 may include a computer storage medium in a form of a volatile memory and/or a non-volatile memory, for example, a read-only memory and/or a random access memory. The memory 902 may store an operating system, an application program, another program module, executable code, and program data.

The input device 904 may be configured to input commands and information to an AMF device or an MSC. For example, the input device 904 is a keyboard or a pointing device, for example, a mouse, a trackball, a touchpad, a microphone, a joystick, a gamepad, a satellite television antenna, a scanner, or a similar device. These input devices may be connected to the processor 901 through the bus 903.

The output device 905 may be configured to output information from an AMF device or an MSC. In addition to a monitor, the output device 905 may be alternatively other peripheral output devices, for example, a speaker and/or a printing device. These output devices may also be connected to the processor 901 through the bus 903.

The SEPP device or the security server may be connected to a communication network, for example, a local area network (Local Area Network, LAN), through the network interface 906. In a networked environment, computer-executable instructions stored on the SEPP device and the security server may be stored to a remote storage device, and are not limited to local storage.

When the processor 901 in the SEPP device executes the executable code or the application program stored in the memory 902, the SEPP device may perform the method steps on the SEPP device side in the foregoing method embodiments, for example, steps 201, 203, 303, 307, and 405. For a specific execution process, refer to the foregoing method embodiments. Details are not described herein again.

When the processor 901 in the security server executes the executable code or the application program stored in the memory 902, the security server may perform the method steps on the security server side in the foregoing method embodiments, for example, steps 203, 204, and 403. For a specific execution process, refer to the foregoing method embodiments. Details are not described herein again.

An embodiment of this application further provides a computer-readable storage medium. The computer-readable storage medium stores a computer program. When the computer program is executed by hardware (for example, a processor), some or all of steps of any method that can be performed by an SEPP device or a security server in embodiments of this application can be completed.

An embodiment of this application further provides a computer program product including instructions. When the computer program product is run on a computer device, the computer device is enabled to perform some or all of steps of any method that can be performed by an SEPP device or a security server.

All or some of the foregoing embodiments may be implemented using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing embodiments, descriptions of embodiments have respective focuses. For a part that is not described in detail in an embodiment, refer to related descriptions in other embodiments.

In the foregoing embodiments, descriptions of embodiments have respective focuses. For a part that is not described in detail in an embodiment, refer to related descriptions in other embodiments.

In the several embodiments provided in this application, it should be understood that the disclosed apparatus may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual indirect couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, in other words, may be located in one position, or may be distributed on a plurality of network units. Some or all of the units may be selected based on actual needs to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application.

## Claims

1. A secure communication method, comprising:
receiving, by a first security and edge protection proxy SEPP device, a first message from a security server, wherein the first message carries a security certificate corresponding to a second SEPP device;
receiving, by the first SEPP device, a device certificate sent by the second SEPP device;
performing, by the first SEPP device, verification on the device certificate of the second SEPP device by using the security certificate; and
establishing, by the first SEPP device, a security connection to the second SEPP device after the verification succeeds.

2. The method according to claim 1, wherein before the receiving, by a first SEPP device, a first message from a security server, the method further comprises:
sending, by the first SEPP device, a certificate request message to the security server, wherein the certificate request message carries an identifier of the second SEPP device.

3. The method according to claim 1, wherein the security certificate corresponding to the second SEPP device is a root certificate of a certificate server of the second SEPP device.

4. The method according to claim 2, wherein the security server is a domain name system DNS server, and the certificate request message is a DNS query request.

5. The method according to claim 1, wherein before the receiving, by a first SEPP device, a first message from a security server, the method further comprises:
sending, by the first SEPP device, a second message to the security server, wherein the second message carries a security certificate corresponding to the first SEPP device.

6. The method according to claim 5, wherein the second message further carries an identifier of the first SEPP device.

7. The method according to claim 1, further comprising:
when successfully verifying the device certificate of the second SEPP device by using the security certificate, sending, by the first SEPP device, a verification success message to the second SEPP device.

8. The method according to claim 1 or 7, wherein the establishing, by the first SEPP device, a security connection to the second SEPP device comprises:
calculating, by the first SEPP device, a session key used for secure communication with the second SEPP device; and
establishing, by the first SEPP device, a security connection to the second SEPP device by using the session key.

9. A secure communication method, comprising:
obtaining, by a security server, a security certificate corresponding to a second security and edge protection proxy SEPP device; and
sending, by the security server, a first message to a first SEPP device, wherein the first message carries the security certificate corresponding to the second SEPP device.

10. The method according to claim 9, wherein before the obtaining, by a security server, a security certificate corresponding to a second SEPP device, the method further comprises:
receiving, by the security server, a certificate request message sent by the first SEPP device, wherein the certificate request message carries an identifier of the second SEPP device.

11. The method according to claim 9, wherein before the obtaining, by a security server, a security certificate corresponding to a second SEPP device, the method further comprises:
receiving, by the security server, a second message sent by the second SEPP device, wherein the second message carries the security certificate corresponding to the second SEPP device.

12. The method according to claim 10, wherein the second message further carries the identifier of the second SEPP device.

13. A computer-readable storage medium, wherein
the computer-readable storage medium stores a computer program; and when the computer program is executed by a processor, the method according to any one of claims 1 to 12 can be completed.

14. A security and edge protection proxy SEPP device, comprising:
at least one processor and a memory coupled to the processor, wherein the memory stores computer program code, and the processor invokes and executes the computer program code in the memory, to enable the SEPP device to perform the method according to any one of claims 1 to 8.

15. A security server, comprising:
at least one processor and a memory coupled to the processor, wherein the memory stores computer program code, and the processor invokes and executes the computer program code in the memory, to enable the security server to perform the method according to any one of claims 10 to 12.

16. A secure communication system, comprising:
a core-network network function device and a first security and edge protection proxy SEPP device, wherein the core-network network function device is configured to send a signaling message to the first SEPP device; and
the first SEPP device is configured to: perform the method according to any one of claims 1 to 8, and send the received signaling message to a second SEPP device through a security connection.
